# EUROPÄISCHE PATENTSCHRIFT

(11) **EP 3 155 342 B1**
(45) Veröffentlichungstag und Bekanntmachung des Hinweises auf die Patenterteilung: **24.10.2018**
(21) Anmeldenummer: 15727413.5
(22) Anmeldetag: 09.06.2015
(51) Int. Cl.: F27B 7/20, C04B 7/36, C04B 7/43, F27D 17/00, F27D 19/00

(54) **VERFAHREN ZUR ABGASBEHANDLUNG UND ANLAGE MIT EINER ABGASBEHANDLUNGSVORRICHTUNG**
METHOD FOR EXHAUST GAS TREATMENT, AND SYSTEM COMPRISING AN EXHAUST GAS TREATMENT DEVICE
PROCÉDÉ DE TRAITEMENT DES FUMÉES ET INSTALLATION ÉQUIPÉE D'UN DISPOSITIF DE TRAITEMENT DES FUMÉES

(30) Priorität: 10.06.2014 DE 102014108154
(43) Veröffentlichungstag der Anmeldung: 19.04.2017
(73) Patentinhaber: Maerz Ofenbau AG, 8027 Zürich (CH)
(72) Erfinder: ZURHOVE, Franz-Josef, 79761 Waldshut-Tiengen (DE)
(74) Vertreter: thyssenkrupp Intellectual Property GmbH
(86) Internationale Anmeldenummer: PCT/EP2015/062779
(87) Internationale Veröffentlichungsnummer: WO 2015/189176

(56) Entgegenhaltungen:
- EP-A1- 1 842 836
- WO-A1-2005/108891
- WO-A1-2013/124372
- DE-B3-102010 004 011

## Beschreibung

Die Erfindung betrifft ein Verfahren zur Behandlung von Abgas in einer Anlage mit einer Abgasbehandlungsvorrichtung, einer Aufbereitungsvorrichtung zur mechanischen und/oder thermischen Aufbereitung eines anorganischen Materials und einem Materialvorwärmer, in dem das Material durch einen Wärmetausch mit dem Abgas vorgewärmt wird. Die Erfindung betrifft weiterhin eine entsprechende Anlage.

Eine solche Anlage kommt beispielsweise bei der Herstellung von Zementklinker zum Einsatz. Dabei wird das Rohmehl vor dem Einbringen in einen Drehrohrofen in einem in der Regel vier- bis sechsstufigen Zyklonvorwärmer im Gegenstrom zu dem aus dem Drehrohrofen austretenden Abgas vorgewärmt. Dabei wird das Abgas in der Regel auf eine Temperatur von zwischen 250°C und 450°C heruntergekühlt.

In den Verlauf des Abgasstrangs können weitere Vorrichtungen integriert sein, die bevorzugt bei höheren als diesen üblichen Abgastemperaturen (nach Materialvorwärmer) betrieben werden. Bei diesen Vorrichtungen kann es sich insbesondere um solche zur Abgasbehandlung mittels katalytischer und/oder (regenerativer) oxidativer Minderung von Schadstoffen handeln.

Für die Abgasbehandlungsvorrichtung kann die Einstellung einer passenden Abgastemperatur erforderlich sein, um in einem passenden Temperaturbereich für die Schadstoffminderung zu sein. Eine solche Einstellung der Abgastemperatur vor der Abgasbehandlungsvorrichtung kann durch verschiedene Maßnahmen, wie beispielsweise eine Wasseraufgabe, einen Wärmetauscher mit Wärmezu- oder - abfuhr oder eine Zugabe eines anderes Gasstromes mit anderer Temperatur erfolgen. Soll beispielsweise eine Erhöhung der Abgastemperatur nach dem Vorwärmer erfolgen, kann dies durch eine zusätzliche Wärmezufuhr, beispielsweise mittels eines Zuheizers z.B. in Form von Brennern oder einer Brennkammer, erreicht werden. Dies ist jedoch mit einem erheblichen zusätzlichen baulichen Aufwand verbunden. Zudem sind in entsprechenden Zuheizern regelmäßig nur schnell und leicht ausbrennbare Brennstoffe, wie insbesondere Erdgas oder Öl und unter bestimmten Voraussetzungen auch Kohle, einsetzbar, was mit hohen Kosten für die Brennstoffe einhergeht.

Die WO 2005/108891 A1 offenbart eine Anlage zur Herstellung von Zementklinker mit einem Klinkerofen mit Kalzinator, einem dem Klinkerofen in Fördervorrichtung des Rohmehls vorgeschalteten Zyklon-Vorwärmer und einem dem Vorwärmer in Strömungsrichtung von aus dem Klinkerofen stammenden und über den Vorwärmer geführten Abgases nachgeschalteten Katalysators. Mittels einer Materialweiche kann ein Teil des Rohmehls im Bereich einer obersten Zyklonstufe und ein Teil im Bereich der darunterliegenden Zyklonstufe zugeführt werden, um dadurch die Temperatur des Abgases, die in den Katalysator gelangt, gezielt einstellen beziehungsweise variieren zu können. Weiterhin ist offenbart, dass durch eine gestufte Verbrennung und/oder eine gestufte Mehlzugabe in dem Kalzinator die Temperatur des dem Katalysator zugeführten Abgases angepasst werden kann. Ausgehend von diesem Stand der Technik hat der Erfindung die Aufgabe zugrunde gelegen, eine vorteilhafte Möglichkeit zur Abgasbehandlung von aus einer Aufbereitungsvorrichtung zur mechanischen und/oder thermischen Aufbereitung von Material und insbesondere von aus einem Zementklinkerofen stammendem Abgas anzugeben.

Diese Aufgabe wird mittels eines Verfahrens gemäß dem Patentanspruch 1 und einer Anlage gemäß dem Patentanspruch 2 gelöst. Vorteilhafte Ausführungsformen des erfindungsgemäßen Verfahrens und vorteilhafte Ausgestaltungen der erfindungsgemäßen Anlage sind Gegenstand der weiteren Patentansprüche und ergeben sich aus der nachfolgenden Beschreibung der Erfindung.

Der Erfindung liegt die Erkenntnis zugrunde, dass eine Erhöhung der Abgastemperatur nach dem Materialvorwärmer auch dadurch erreicht werden kann, dass in einer bereits vorhandenen Feuerung der Aufbereitungsvorrichtung ein erhöhter Brennstoffumsatz verfeuert wird. Dadurch kann prinzipiell auf einen Zuheizer verzichtet oder dieser leistungsschwächer ausgelegt werden. Durch einen erhöhten Brennstoffumsatz in der Aufbereitungsvorrichtung wird jedoch nicht nur die Temperatur des die Aufbereitungsvorrichtung verlassenden Abgases sondern auch die Temperaturen in der Aufbereitungsvorrichtung selbst erhöht. Dies kann unerwünscht bzw. nicht möglich sein, da sich beispielsweise das Material bei höheren Temperaturen in seinen Eigenschaften bezüglich der Handhabung, z.B. hinsichtlich der Ansatzbildung oder der Qualität, verschlechtert. Als Gegenmaßnahme könnte dann vorgesehen sein, dass das der Aufbereitungsvorrichtung zugeführte Material in geringerem Maße vorgewärmt wird und folglich mit geringerer Temperatur in die Aufbereitungsvorrichtung, beispielsweise einen Ofen (mit oder ohne Kalzinator), eintritt. Der dann größere Wärmeübergang auf das Material hält die Gastemperaturen in der Aufbereitungsvorrichtung trotz des erhöhten Brennstoffumsatzes in den vorgesehenen Grenzen.

Ein Grundgedanke der Erfindung ist daher, die Temperatur des der Abgasbehandlungsvorrichtung zuzuführenden Abgases durch einen angepassten Wärmetausch des Abgases mit dem vorzuwärmenden Material einzustellen, ohne dabei verfahrenstechnisch begründete Begrenzungen der Materialtemperaturen in der Aufbereitungsvorrichtung zu verletzen.

Demnach ist ein gattungsgemäßes Verfahren zur Behandlung von Abgas in einer Abgasbehandlungsvorrichtung, wobei das Abgas aus einer Aufbereitungsvorrichtung zur mechanischen und/oder thermischen Aufbereitung eines anorganischen Materials stammt und wobei das Abgas das der Aufbereitungsvorrichtung zuzuführende Material durch Wärmetausch vorwärmt, wobei die Temperatur des in die Abgasbehandlungsvorrichtung eintretenden Abgases durch einen angepassten Wärmetausch des Abgases mit dem Material in Kombination mit einer angepassten Wärmeerzeugung in der Aufbereitungsvorrichtung eingestellt wird, dadurch gekennzeichnet, dass ein Einfluss eines veränderlichen Wärmetauschs beim Vorwärmen des Materials auf die Temperaturen in der Aufbereitungsvorrichtung durch eine Anpassung der Wärmeerzeugung in der Aufbereitungsvorrichtung kompensiert wird.

Eine erfindungsgemäße, zur Durchführung eines erfindungsgemäßen Verfahrens geeignete Anlage umfasst zumindest eine Aufbereitungsvorrichtung zur mechanischen und/oder thermischen Aufbereitung eines anorganischen Materials, die eine Wärmeerzeugungsvorrichtung aufweist, eine, bezogen auf die Strömungsrichtung des aus der Aufbereitungsvorrichtung stammenden Abgases, sich an die Aufbereitungsvorrichtung anschließende Abgasbehandlungsvorrichtung sowie einen zwischen der Aufbereitungsvorrichtung und der Abgasbehandlungsvorrichtung angeordneten Materialvorwärmer, in dem ein Wärmeübergang von dem Abgas auf das Material erfolgt, wobei der Materialvorwärmer eine oder - vorzugsweise - mehrere Wärmetauscherstufen umfasst. Bei der Aufbereitungsvorrichtung kann es sich insbesondere um einen Ofen, beispielsweise zum Brennen von Zementklinker, handeln. Die Aufbereitungsvorrichtung kann auch - neben einem solchen Ofen, eine Vorrichtung zur Kalzination (Kalzinator) und/oder zur Zugabe von zusätzlichem Brennstoff umfassen. Eine solche Anlage wobei eine erste Zufuhr für das Material, bezogen auf die Richtung des Durchlaufs des Materials durch den Materialvorwärmer, vor einer Wärmetauscherstufe angeordnet ist und eine zweite Zufuhr für das Material, bezogen auf die Richtung des Durchlaufs des Materials durch den Materialvorwärmer, hinter dieser Wärmetauscherstufe angeordnet ist, gekennzeichnet durch eine Steuereinrichtung, mittels der das Material bedarfsweise auf die erste Zufuhr und die zweite Zufuhr zur Beeinflussung der Temperatur des in die Abgasbehandlungsvorrichtung eintretenden Abgases aufgeteilt werden kann, und eine Steuereinrichtung mittels der eine Wärmeeinbringung durch die Wärmeerzeugungsvorrichtung in die Aufbereitungsvorrichtung einstellbar ist, wobei die Steuerung(en) derart ausgebildet ist/sind, dass ein Einfluss eines veränderlichen Wärmetauschs beim Vorwärmen des Materials auf die Temperaturen in der Aufbereitungsvorrichtung durch eine Anpassung der Wärmeerzeugung in der Aufbereitungsvorrichtung kompensiert wird.

Dabei ist die entsprechende Wärmetauscherstufe vorzugsweise diejenige, die von dem Material beim Durchlauf durch den Materialvorwärmer zuerst durchlaufen wird. Dadurch kann erreicht werden, dass der Wärmetausch von dem Abgas auf das Material primär in dem oder den der Aufbereitungsvorrichtung näher liegenden Wärmetauscherstufen erfolgt. Dies kann sich positiv auf Druckverluste im Materialvorwärmer sowie in einem gegebenenfalls an den Materialvorwärmer angeschlossenen Kalzinator auswirken.

Bei der Aufbereitungsvorrichtung kann es sich vorzugsweise um einen Ofen, beispielsweise Drehrohrofen, mit oder ohne Kalzinator, handeln. Der Ofen kann weiterhin bevorzugt zum Brennen von Zementklinker dienen. Bei dem aufzubereitenden Material kann es sich demnach vorzugsweise um Zementrohmehl handeln. Auch Anlagen aus dem Bereich der Mineralsindustrie nach ähnlichem Prinzip fallen darunter. Dabei kann es sich beispielsweise um die Aufbereitung von Erzen im Drehrohrofen mit vorgeschaltetem Wärmetauscher, wie beispielsweise Vanadiumerze oder auch um Kalk- oder Dolomitöfen handeln.

Der Materialvorwärmer kann insbesondere in Form eines mehrstufigen (z.B. vier, fünf oder sechs Stufen) Zyklonvorwärmers ausgebildet sein, dessen Aufbau und Funktionsweise allgemein bekannt sind.

Um zu vermeiden, dass durch die Anpassung des Wärmetauschs in dem Materialvorwärmer die Temperaturen in der Aufbereitungsvorrichtung negativ beeinflusst werden, ist bei dem erfindungsgemäßen Verfahren zum anderen vorgesehen, einen solchen Einfluss eines veränderlichen Wärmetauschs in dem Materialvorwärmer durch eine Anpassung der Wärmeerzeugung in der Aufbereitungsvorrichtung zu kompensieren. Die Aufbereitungsvorrichtung der erfindungsgemäßen Anlage weist dazu eine Wärmeerzeugungsvorrichtung auf, wobei eine Wärmeeinbringung in die Aufbereitungsvorrichtung (beziehungsweise das darin genutzte Prozessgas) durch die Wärmeerzeugungsvorrichtung mittels einer Steuereinrichtung einstellbar ist.

Da die Wärmeerzeugung in der Aufbereitungsvorrichtung auch einen Einfluss auf die Temperatur des in die Abgasbehandlungsvorrichtung eintretenden Abgases hat, kann durch die Kombination beider Maßnahmen erreicht werden, dass die Temperatur des Abgases auf einen für die Abgasbehandlungseinrichtung vorgesehenen Temperaturbereich eingestellt werden kann, ohne dass sich dies negativ auf die Temperaturen in der Aufbereitungsvorrichtung auswirkt. Im Ergebnis kann somit eine zusätzliche Wärmeeinbringung in das Abgas, wodurch dieses eine für die Abgasnachbehandlungseinrichtung geeignete Temperatur erreichen soll, durch eine erhöhte Wärmeerzeugung in der Aufbereitungsvorrichtung erreicht werden, wobei die zusätzliche Wärmeenergie durch einen verringerten (d.h. geringer als maximal mit dem Materialvorwärmer möglich) Wärmeübergang von dem Abgas auf das Material durch den Materialvorwärmer "geschleust" und somit in der Abgasbehandlungsvorrichtung zur Verfügung steht. Auf einen dem Materialvorwärmer nachgeschalteten Zuheizer kann dadurch verzichtet werden.

Um eine möglichst hohe Umwandlungsrate für in dem Abgas enthaltene Schadstoffe auch bei vergleichsweise niedrigen Abgastemperaturen zu erreichen kann vorzugsweise vorgesehen sein, dass die Abgasbehandlungsvorrichtung eine Katalysatorvorrichtung umfasst.

Die Katalysatorvorrichtung kann insbesondere einen Oxidationskatalysator, insbesondere edelmetallhaltigen Oxidationskatalysator, umfassen, durch den insbesondere eine Minderung von in dem Abgas enthaltenem Kohlenmonoxid (CO) und organischen Kohlenwasserstoffen (THC) erreicht werden kann. Zusätzlich oder alternativ kann die Katalysatorvorrichtung auch einen Reduktionskatalysator umfassen, durch den insbesondere Stickoxide (NOx) umgewandelt werden können.

Sofern sowohl die Integration eines Oxidationskatalysators als auch eines Reduktionskatalysators vorgesehen ist, kann vorzugsweise vorgesehen sein, dass der Oxidationskatalysator in Strömungsrichtung des Abgases vor dem Reduktionskatalysator angeordnet ist. Eine umgekehrte Reihenfolge der Katalysatoren ist ebenfalls möglich.

Ein Solltemperaturbereich des Abgases beim Eintritt in den Oxidationskatalysator, der auch in Form eines einzelnen Temperaturwerts definiert sein kann, liegt vorteilhafterweise zwischen 150°C und 650°C, vorzugsweise zwischen 180°C und 550°C, weiter bevorzugt zwischen 220°C und 450°C und besonders bevorzugt zwischen 250°C und 390°C. Dabei muss der Solltemperaturbereich nicht mit den quantitativ definierten Temperaturbereichen übereinstimmen, sondern kann vielmehr auch einen Teilbereich davon darstellen.

Ein Solltemperaturbereich des Abgases beim Eintritt in den Reduktionskatalysator, der auch in Form eines einzelnen Temperaturwerts definiert sein kann, liegt vorteilhafterweise zwischen 150°C und 420°C, vorzugsweise zwischen 180°C und 400°C, besonders bevorzugt zwischen 220°C und 380°C. Dabei muss der Solltemperaturbereich nicht mit den quantitativ definierten Temperaturbereichen übereinstimmen, sondern kann vielmehr auch einen Teilbereich davon darstellen.

In einer weiterhin bevorzugten Ausgestaltung der erfindungsgemäßen Anlage kann vorgesehen sein, dass die Steuereinrichtung als Regeleinrichtung ausgebildet ist, die die Aufteilung des Materials und/oder die Wärmeeinbringung in das Abgas durch die Wärmeerzeugungsvorrichtung in Abhängigkeit von einem Solltemperaturbereich für das Abgas beim Eintritt in die Abgasbehandlungsvorrichtung (zumindest teilautomatisch) regelt. Alternativ oder zusätzlich kann als Regelgröße für die Aufteilung des Materials und/oder die Wärmeeinbringung auch eine Emissionsmessung stromauf, innerhalb und/oder stromab der Abgasbehandlungsvorrichtung dienen.

Bei einer Ausgestaltung der erfindungsgemäßen Anlage mit einem Oxidationskatalysator und einem diesem nachgeschalteten Reduktionskatalysator kann vorteilhaft vorgesehen sein, dass ein für die Reaktionen in dem Reduktionskatalysator genutztes, insbesondere ammoniakhaltiges Reduktionsmittel über eine Zudosiervorrichtung in das Abgas eingebracht wird, die zwischen dem Oxidationskatalysator und dem Reduktionskatalysator angeordnet ist. Dadurch kann vermieden werden, dass der Oxidationskatalysator mit Abgas, das bereits mit Reduktionsmittel versetzt ist, beaufschlagt wird. Dadurch kann insbesondere vermieden werden, dass das Reduktionsmittel im Oxidationskatalysator verbrannt wird, was ansonsten die Effizienz einer Oxidation von Kohlenmonoxid und organischen Kohlenwasserstoffen stark reduzieren könnte.

Die Zudosiervorrichtung kann vorzugsweise regelbar ausgebildet sein, wobei eine Regelung in Abhängigkeit von insbesondere den Stickoxidkonzentrationen im Abgas erfolgt. Diese vielfach stark schwankenden Stickoxidkonzentrationen können an beliebiger Stelle stromauf des Reduktionskatalysators mittels einer entsprechenden Messvorrichtung bestimmt werden.

Weiterhin kann bei einer Ausgestaltung der erfindungsgemäßen Anlage mit einem Oxidationskatalysator und einem diesem nachgeschalteten Reduktionskatalysator vorteilhaft vorgesehen sein, dass zwischen dem Oxidationskatalysator und dem Reduktionskatalysator eine Kühlvorrichtung für das Abgas angeordnet ist. Dadurch kann erreicht werden, dass dem Oxidationskatalysator, der in Strömungsrichtung des Abgases dem Reduktionskatalysator vorgeschaltet ist, Abgas mit einer vergleichsweise hohen Temperatur zugeführt werden kann, ohne dass dies mit einer ungewollt hohen Abgastemperatur im Reduktionskatalysator verbunden wäre. Zudem kann durch die Kühlvorrichtung auch eine durch die exotherme Oxidation von insbesondere Kohlenmonoxid und organischen Kohlenwasserstoffen im Oxidationskatalysator begründete Wärmeeinbringung in das Abgas rückgängig gemacht werden. Die Kühlvorrichtung ist vorzugsweise derart ausgelegt, dass der bereits zuvor beschriebene Solltemperaturbereich für das Abgas beim Eintritt in den Reduktionskatalysator erreicht werden kann. Besonders bevorzugt kann vorgesehen sein, dass die Kühlleistung der Kühlvorrichtung einstellbar ist, um auf unterschiedliche Temperaturen des den Oxidationskatalysator verlassenden Abgases zu reagieren. Insbesondere kann die Kühlleistung der Kühlvorrichtung auch mittels einer Regeleinrichtung in Abhängigkeit von der Temperatur des Abgases beim Eintritt in den Reduktionskatalysator regelbar sein.

Die Kühlvorrichtung kann vorzugsweise eine Zudosiervorrichtung für Wasser oder eine wässerige Lösung umfassen. Die Kühlwirkung beruht dann auf der für das Verdampfen des Wassers oder der wässerigen Lösung erforderlichen Energie, die dem Abgas entzogen wird.

Dabei kann die Zudosiervorrichtung für Wasser oder eine wässrige Lösung integral mit einer Zudosiervorrichtung für Reduktionsmittel ausgebildet sein, d.h. durch eine gemeinsame Düsenvorrichtung kann eine wässrige Reduktionsmittellösung in das Abgas eingebracht werden.

Vorteilhafterweise kann dann noch vorgesehen sein, dass die integrale Zudosiervorrichtung keinen Rücklauf für die wässrige Reduktionsmittellösung von der Düsenvorrichtung zu einem Vorratsbehälter der integralen Zudosiervorrichtung aufweist, da ein solcher Rücklauf die Regelbarkeit der Dosierung des Reduktionsmittels in dem Wasser erschweren würde. Dies würde eine schnelle Regelbarkeit der Eindosierung von Reduktionsmittel in Abhängigkeit von den gegebenenfalls stark schwankenden Stickoxidkonzentrationen im Abgas behindern.

Vorzugsweise kann vorgesehen sein, dass der Oxidationskatalysator, der Reduktionskatalysator und die Zudosiervorrichtungen für das Reduktionsmittel sowie Wasser oder eine wässerige Lösung in einem Gehäuse von oben nach unten von dem Abgas durchströmt werden. Dabei kann das Gehäuse weiterhin bevorzugt einen im Wesentlichen konstanten Querschnitt aufweisen.

In einer weiterhin bevorzugten Ausgestaltung der erfindungsgemäßen Anlage kann zudem noch eine Entstaubungsvorrichtung für die Abgasbehandlungsvorrichtung vorgesehen sein, durch die sich ein Absetzen von Staub auf Elementen der Katalysatoreinrichtung verhindert und/oder bereits abgesetzter Staub wieder entfernt werden kann. Diese Entstaubungsvorrichtung kann beispielsweise in Form eines an sich bekannten Staubbläsers, insbesondere eines für die Verwendung in Zementbearbeitungsanlagen ausgelegten Staubbläsers ausgebildet sein. Sofern die Abgasbehandlungsvorrichtung mehrere räumlich getrennte Komponenten, beispielsweise einen Oxidationskatalysator und einen Reduktionskatalysator, umfasst, kann auch vorgesehen sein, für mehrere oder alle dieser Komponenten jeweils eine Entstaubungsvorrichtung vorzusehen.

Die Integration einer oder mehrerer Vorrichtungen zum Staubabreinigen in der erfindungsgemäßen Anlage kann insbesondere aufgrund der im Abgas enthaltenen Staubmengen sinnvoll sein, wenn ein Staubfilter sich in Strömungsrichtung des Abgases an die Abgasbehandlungsvorrichtung anschließt. Bei einer sogenannten "High-Dust"-Anordnung der Abgasbehandlungsvorrichtung kann nämlich der Staubgehalt im Abgas, zumindest dann, wenn mittels der Aufbereitungsvorrichtung Zementklinker gebrannt werden, bis zu 100 g/Nm³ betragen oder sogar überschreiten.

Die Abgasbehandlungsvorrichtung der erfindungsgemäßen Anlage kann alternativ oder zusätzlich zu einer Katalysatorvorrichtung eine Vorrichtung zur (regenerativ) thermischen Oxidation umfassen. Bei einer solchen thermischen Oxidationsvorrichtung wird die für die Oxidation erforderliche Temperatur nicht durch ein Katalysatormaterial gesenkt, wodurch diese insbesondere auch für die Behandlung von Katalysatorgifte enthaltenen Abgasen geeignet ist. Die für die thermische Oxidation erforderliche Temperatur des Abgases, die für die Umwandlung von Kohlenwasserstoffen zu Kohlendioxid (CO2) und Wasser (H2O) bei ca. 800°C liegt, könnte dabei - ergänzend zu der Einstellung der Temperatur über einen angepassten Wärmetausch des Abgases mit dem vorzuwärmenden Material und der angepassten Wärmeerzeugung in der Aufbereitungsvorrichtung - auch durch regenerative Maßnahmen erzeugt werden. Dabei würde dem Abgas stromab der thermischen Oxidationsvorrichtung Wärmeenergie entzogen und diese Wärmeenergie dann zur zusätzlichen Erwärmung des Abgases stromauf der thermischen Oxidationsvorrichtung genutzt werden. Hierzu können beispielsweise mindestens zwei Wärmespeicher mit vorzugsweise keramischen Speichermassen vorgesehen sein, von denen einer von dem Abgas stromauf der thermischen Oxidationsvorrichtung und die andere von dem Abgas stromab der thermischen Oxidationsvorrichtung durchströmt wird, wobei deren Integration in den Abgasstrom zyklisch umgeschaltet wird. Eine solche Anlage kann dabei auch zusätzlich Elemente zur katalytischen Reduktion oder Oxidation enthalten.

Die erfindungsgemäße Temperatureinstellung zur Sicherstellung eines möglichst idealen Temperaturbereiches des Abgases kann auch bei beispielsweise einer Abgasbehandlungsvorrichtung für andere Schadstoffe, wie beispielsweise Schwefel, Anwendung finden.

Die Verwendung unbestimmter Artikel ("ein", "einer", "eines", etc.), insbesondere in den Patentansprüchen und dem diese erläuternden Teil der Beschreibung, ist als solche und nicht als Verwendung von Zahlwörtern zu verstehen. Diese Verwendung ist somit so zu verstehen, dass die damit gekennzeichneten Elemente mindestens einmal vorhanden sind und mehrmals vorhanden sein können.

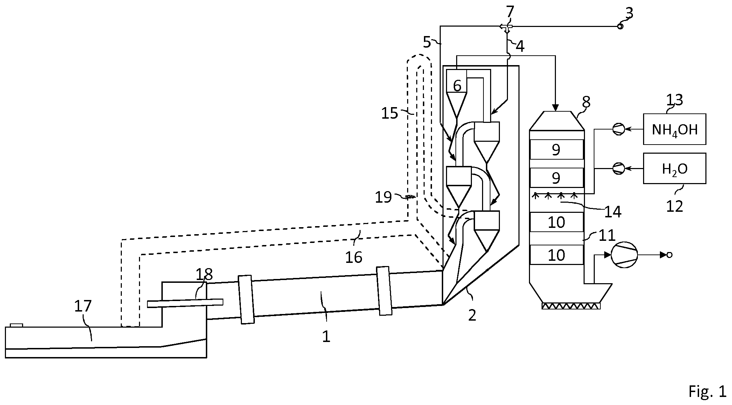

Die Erfindung wird nachfolgend anhand eines in den Zeichnungen dargestellten Ausführungsbeispiels näher erläutert. In der Zeichnung zeigt die
Fig. 1: eine erfindungsgemäße Anlage in einer schematischen Darstellung.

Die in der Fig. 1 dargestellte Anlage dient der Herstellung von Zementklinker, der in einer Aufbereitungsvorrichtung in Form eines Drehrohrofens 1 aus Zementrohmehl, gebrannt wird. Dazu wird das fein vermahlene Zementrohmehl, das organische Bestandteile umfasst, in heiße Brenngase die aus dem Drehrohrofen 1 und aus einem optional vorhandenen Kalzinator (15) stammen, dispergiert, wobei die organischen Bestandteile aus dem Zementrohmehl ausgetrieben und unvollständig verbrannt werden.

Dem Drehrohrofen 1 ist, bezogen auf die Durchlaufrichtung des Materials (Zementrohmehl beziehungsweise Zementklinker), ein Materialvorwärmer 2 in Form eines mehrstufigen Zyklonvorwärmers mit integriertem Kalzinator 15 vorgeschaltet. In dem Materialvorwärmer 2 wird das Zementrohmehl in mehreren Stufen von dem aus dem Drehrohrofen 1 stammenden Abgas durchströmt und mitgerissen und anschließend in einem Zyklon der jeweiligen Vorwärmerstufe wieder aus dem Abgasstrom separiert. Der Zyklonvorwärmer weist wie üblich einen vertikalen Aufbau auf, so dass das Zementrohmehl, soweit es von dem Abgasstrom mitgerissen wird, primär entgegen der Schwerkraftrichtung bewegt wird und nach der Separierung in den Zyklonen schwerkraftbedingt zur nächsten Vorwärmerstufe fällt. Andere übliche Arten der Vorwärmung, wie beispielsweise gestufte Verweilzeitreaktoren, sind ebenfalls möglich.

Das Zementrohmehl wird über eine Zementrohmehlaufgabe 3 in die Anlage aufgegeben und dem Materialvorwärmer 2 zugeführt. Dabei erfolgt eine Aufteilung des Zementrohmehls auf eine erste Zufuhr 4, die, bezogen auf die Richtung des Durchlaufs des Zementrohmehls durch den Materialvorwärmer 2, vor der ersten (hier obersten) Wärmetauscherstufe 6 angeordnet ist, und eine zweite Zufuhr 5. Das über diese erste Zufuhr 4 in den Materialvorwärmer 2 eingebrachte Zementrohmehl nimmt somit an einem Wärmetausch mit dem Abgas in dieser ersten Wärmetauscherstufe 6 (und auch allen anderen Wärmetauscherstufen) teil. Die zweite Zufuhr 5 ist, bezogen auf die Richtung des Durchlaufs des Zementrohmehls durch den Materialvorwärmer 2, hinter der ersten Wärmetauscherstufe 6 angeordnet. Das über diese zweite Zufuhr 5 in den Materialvorwärmer 2 eingebrachte Zementrohmehl nimmt somit an einem Wärmetausch mit dem Abgas in der ersten Wärmetauscherstufe 6 nicht teil, jedoch in allen anderen Wärmetauscherstufen. Wenn ein Teil des Zementrohmehls nicht alle Wärmetauscherstufen durchläuft, verbleibt der Gesamtwärmeübergang von dem Abgas auf das vorzuwärmende Material unter einem anlagenspezifischen und betriebsparameterabhängigen Maximum, was sowohl einen Einfluss auf die Temperatur des vorgewärmten Zementrohmehls als auch auf die Temperatur des den Materialvorwärmer 2 verlassenden Abgases hat.

Die Größen der über die erste Zufuhr 4 und die zweite Zufuhr 5 in den Materialvorwärmer 2 eingebrachten Zementrohmehlströme können über eine Steuereinrichtung 7 bedarfsgerecht eingestellt werden. Dies ermöglicht folglich eine bedarfsgerechte Einstellung der Temperatur des den Materialvorwärmer 2 verlassenden Abgases, das anschließend einer Abgasbehandlungsvorrichtung 8 mit einer Katalysatorvorrichtung zugeführt wird. Konkret ist die Steuereinrichtung 7 dabei als Regeleinrichtung ausgebildet, die in Abhängigkeit von einer gemessenen Temperatur des in die Abgasbehandlungsvorrichtung 8 eintretenden Abgases die Größen der über die erste Zufuhr 4 und die zweite Zufuhr 5 in den Materialvorwärmer 2 eingebrachten Zementrohmehlströme derart regelt, dass sich die gemessene Abgastemperatur in einem Solltemperaturbereich befindet. Dieser Solltemperaturbereich ist dabei hinsichtlich einer möglichst hohen Minderungsrate für Schadstoffe mittels eines mehrlagigen Oxidationskatalysators 9 der Abgasbehandlungsvorrichtung 8 gewählt.

In Strömungsrichtung des Abgases ist dem Oxidationskatalysator 9 ein mehrlagiger Reduktionskatalysator 10 nachgeschaltet. Dieser basiert auf dem Prinzip der selektiven katalytischen Reduktion von insbesondere Stickoxiden. Dazu wird dem Abgas in bekannter Weise stromauf des Reduktionskatalysators 10 (und stromab des Oxidationskatalysators 9) ein Reduktionsmittel in Form von Ammoniumhydroxid zugesetzt, das sich gegenüber (der ebenfalls möglichen Verwendung von) Harnstoff als Reduktionsmittel insbesondere durch eine kürzere Verdampfungsstrecke auszeichnet. Zudem würde aus Harnstoff bei der Zersetzung Kohlenmonoxid freigesetzt. In dem Reduktionskatalysator 10 werden die Stickoxide mit dem Ammoniak zu Stickstoff und Wasser reduziert sowie im Abgas noch enthaltene THC-Anteile weiter gemindert.

Der Oxidationskatalysator 9 und der Reduktionskatalysator 10 sind in demselben Gehäuse 11 der Abgasbehandlungsvorrichtung 8 integriert.

Die Temperatur des den Oxidationskatalysator 9 verlassenden Abgases ist für eine dauerhafte Beaufschlagung des Reduktionskatalysators 10 zu hoch. Dies ist insbesondere in Abgasbehandlungsanlagen, deren Abgas Tonmineralien, Anhydrit und höhere Anteile von Calcit, wie es in der Zementindustrie und bei der Aufbereitung von Erzen üblich ist, der Fall. Insbesondere würden derartig hohe Temperaturen des in den Reduktionskatalysator 10 eintretenden Abgases dessen relativ schnelle Deaktivierung bewirken. Die Anlage weist daher eine Kühlvorrichtung für das in den Reduktionskatalysator 10 einzubringende Abgas auf. Diese Kühlvorrichtung ist in Form einer Zudosiervorrichtung 12 für Wasser ausgebildet, die mit einer Zudosiervorrichtung 13 für das Ammoniumhydroxid integral ausgebildet ist. Eine Mischung aus Ammoniumhydroxid und Wasser wird somit über eine gemeinsame Düsenvorrichtung 14 in den Abgasstrom eingebracht. Das eingebrachte Wasser verdampft in dem Abgasstrom und entzieht diesem dadurch Wärmenergie, die zu einer Temperaturabsenkung des gesamten, dann auch das verdampfte Wasser und Ammoniumhydroxid umfassenden Abgasstroms führt. Dadurch wird die Temperatur des in den Reduktionskatalysators 10 eintretenden Abgases auf vorzugsweise maximal 380°C begrenzt.

Der angepasste und insbesondere gegenüber der maximalen Wärmetauschleistung des Materialvorwärmers 2 verringerte Wärmetausch von dem Abgas auf das vorzuwärmende Zementrohmehl beeinflusst nicht nur die Temperatur des in die Abgasbehandlungsvorrichtung 8 eintretenden Abgases sondern auch die Temperatur des in den Drehrohrofen 1 eintretenden Zementrohmehls. Insbesondere kann diese Temperatur des vorgewärmten Zementrohmehls relativ gering sein, was jedoch durch einen erhöhten Brennstoffumsatz in einem oder mehreren, als Wärmeerzeugungsvorrichtungen dienenden Brennern (18, 19) des Drehrohrofens 1 oder - sofern vorhanden - des Kalzinators 15 ausgeglichen werden kann. Dabei kann der Brennstoffumsatz und damit die Wärmeeinbringung in den Drehohrofen 1 sowie in das Abgas mittels einer Steuerungseinrichtung eingestellt beziehungsweise einer Regeleinrichtung geregelt werden. Dabei kann die Temperatur des in die Abgasbehandlungsvorrichtung 8 eintretenden Abgases eine Regelgröße für den Brennstoffumsatz darstellen. Alternativ oder zusätzlich können auch andere Parameter als Regelgröße dienen, beispielsweise eine Gastemperatur in dem optional vorhandenen Kalzinator 15 der Anlage.

In dem Kalzinator 15 kann ein Vorkalzinieren des bereits in dem Zyklonvorwärmer vorgewärmten Zementrohmehls erfolgen, das anschließend in dem Drehrohrofen 1 zu Zementklinker fertig gebrannt wird. Zur Erwärmung und Entsäuerung des Zementrohmehls bei der Vorkalzinierung in dem Kalzinator werden aus dem Drehrohrofen 1 entnommenes Abgas (und erwärmte Kühlluft aus einem dem Drehrohrofen 1 (bezüglich der Durchlaufrichtung des Zementklinkers) nachgeschalteten Klinkerkühler 17, die über eine Tertiärluftleitung 16 dem Kalzinator 15 zugeführt wird, genutzt. Die Separierung des in dem Kalzinator 15 vorkalzinierten Materials von dem Abgas oder der Kühlluft erfolgt dabei in dem Zyklon der letzten Wärmetauscherstufe des Materialvorwärmers 2.

### Bezugszeichen:

- 1: Drehrohrofen
- 2: Materialvorwärmer
- 3: Zementrohmehlaufgabe
- 4: erste Zufuhr
- 5: zweite Zufuhr
- 6: erste Wärmetauscherstufe
- 7: Steuereinrichtung
- 8: Abgasbehandlungsvorrichtung
- 9: Oxidationskatalysator
- 10: Reduktionskatalysator
- 11: Gehäuse
- 12: Zudosiervorrichtung für Wasser
- 13: Zudosiervorrichtung für Ammoniumhydroxid
- 14: Düsenvorrichtung
- 15: Kalzinator
- 16: Tertiärluftleitung
- 17: Klinkerkühler
- 18: Brenner
- 19: Brenner

## Patentansprüche

1. Verfahren zur Behandlung von Abgas in einer Abgasbehandlungsvorrichtung (8) einer Anlage, wobei das Abgas aus einer Aufbereitungsvorrichtung zur mechanischen und/oder thermischen Aufbereitung eines anorganischen Materials der Anlage entnommen wird und wobei das der Aufbereitungsvorrichtung zuzuführende Material durch das Abgas durch Wärmetausch vorgewärmt wird, wobei die Temperatur des in die Abgasbehandlungsvorrichtung (8) eintretenden Abgases durch einen angepassten Wärmetausch des Abgases mit dem Material in Kombination mit einer angepassten Wärmeerzeugung in der Aufbereitungsvorrichtung eingestellt wird, **dadurch gekennzeichnet, dass** ein Einfluss eines veränderlichen Wärmetauschs beim Vorwärmen des Materials auf die Temperaturen in der Aufbereitungsvorrichtung durch eine Anpassung der Wärmeerzeugung in der Aufbereitungsvorrichtung kompensiert wird.

2. Anlage mit einer Aufbereitungsvorrichtung zur mechanischen und/oder thermischen Aufbereitung eines anorganischen Materials, die eine Wärmeerzeugungsvorrichtung aufweist, einer, bezogen auf die Strömungsrichtung des aus der Aufbereitungsvorrichtung stammenden Abgases, sich an die Aufbereitungsvorrichtung anschließenden Abgasbehandlungsvorrichtung (8), einem zwischen der Aufbereitungsvorrichtung und der Abgasbehandlungsvorrichtung (8) angeordneten Materialvorwärmer (2), in dem ein Wärmeübergang von dem Abgas auf das Material erfolgt, wobei der Materialvorwärmer (2) eine oder mehrere Wärmetauscherstufen (6) umfasst, wobei eine erste Zufuhr (4) für das Material, bezogen auf die Richtung des Durchlaufs des Materials durch den Materialvorwärmer (2), vor einer Wärmetauscherstufe (6) angeordnet ist und eine zweite Zufuhr (5) für das Material, bezogen auf die Richtung des Durchlaufs des Materials durch den Materialvorwärmer (2), hinter dieser Wärmetauscherstufe (6) angeordnet ist, **gekennzeichnet durch** eine Steuereinrichtung (7), mittels der das Material bedarfsweise auf die erste Zufuhr (4) und die zweite Zufuhr (5) zur Beeinflussung der Temperatur des in die Abgasbehandlungsvorrichtung (8) eintretenden Abgases aufgeteilt werden kann, und eine Steuereinrichtung mittels der eine Wärmeeinbringung durch die Wärmeerzeugungsvorrichtung in die Aufbereitungsvorrichtung einstellbar ist, wobei die Steuereinrichtung(en) (7) derart ausgebildet ist/sind, dass ein Einfluss eines veränderlichen Wärmetauschs beim Vorwärmen des Materials auf die Temperaturen in der Aufbereitungsvorrichtung durch eine Anpassung der Wärmeerzeugung in der Aufbereitungsvorrichtung kompensiert wird.

3. Anlage gemäß Anspruch 2, **dadurch gekennzeichnet, dass** der Materialvorwärmer (2) als Zyklonvorwärmer ausgebildet ist.

4. Anlage gemäß einem der Ansprüche 2 oder 3, **dadurch gekennzeichnet, dass** die Abgasbehandlungsvorrichtung (8) eine Katalysatorvorrichtung umfasst.

5. Anlage gemäß Anspruch 4, **dadurch gekennzeichnet, dass** die Katalysatorvorrichtung einen Oxidationskatalysator (9) und/oder einen Reduktionskatalysator (10) umfasst.

6. Anlage gemäß Anspruch 5, **dadurch gekennzeichnet, dass** der Oxidationskatalysator (9) in Strömungsrichtung des Abgases vor dem Reduktionskatalysator (10) angeordnet ist.

7. Anlage gemäß Anspruch 5 oder 6, **dadurch gekennzeichnet, dass** die Steuereinrichtung(en) (7) derart ausgebildet ist/sind, dass ein Solltemperaturbereich des Abgases beim Eintritt in den Oxidationskatalysator (9) zwischen 150°C und 650°C, vorzugsweise zwischen 180°C und 550°C, besonders bevorzugt zwischen 220°C und 450°C eingestellt wird.

8. Anlage gemäß einem der Ansprüche 5 bis 7, **dadurch gekennzeichnet, dass** die Steuereinrichtung(en) (7) derart ausgebildet ist/sind, dass ein Solltemperaturbereich des Abgases beim Eintritt in den Reduktionskatalysator (10) zwischen 150°C und 420°C, vorzugsweise zwischen 180°C und 400°C, besonders bevorzugt zwischen 220°C und 380°C eingestellt wird.

9. Anlage gemäß einem der Ansprüche 2 bis 8, **dadurch gekennzeichnet, dass** die Steuereinrichtung (7) als Regeleinrichtung ausgebildet ist, die die Aufteilung des Materials und/oder die Wärmeeinbringung in das Abgas durch die Wärmeerzeugungsvorrichtung in Abhängigkeit von einem Solltemperaturbereich für das Abgas beim Eintritt in die Abgasbehandlungsvorrichtung (8) regelt.

10. Anlage gemäß Anspruch 6 oder einem der von Anspruch 6 abhängigen Ansprüche, **gekennzeichnet durch** eine zwischen dem Oxidationskatalysator (9) und dem Reduktionskatalysator (10) angeordnete Zudosiervorrichtung (13) für ein Reduktionsmittel.

11. Anlage gemäß Anspruch 6 oder einem der von Anspruch 6 abhängigen Ansprüche, **gekennzeichnet durch** eine zwischen dem Oxidationskatalysator (9) und dem Reduktionskatalysator (10) angeordnete Kühlvorrichtung für das Abgas.

12. Anlage gemäß Anspruch 11, **dadurch gekennzeichnet, dass** die Kühlvorrichtung eine zwischen dem Oxidationskatalysator (9) und dem Reduktionskatalysator (10) angeordnete Zudosiervorrichtung (12) für Wasser oder eine wässerige Lösung umfasst.

13. Anlage gemäß Anspruch 10 und Anspruch 12, **dadurch gekennzeichnet, dass** die Zudosiervorrichtung (13) für Reduktionsmittel und die Zudosiervorrichtung (12) für Wasser oder eine wässerige Lösung integral ausgebildet sind.

14. Anlage gemäß Anspruch 13, **dadurch gekennzeichnet, dass** die integrale Zudosiervorrichtung (12, 13) keinen Rücklauf für eine Wasser und Reduktionsmittel umfassende Mischung von einer Düsenvorrichtung (14) zu einem Vorratsbehälter der Zudosiervorrichtung aufweist.

15. Anlage gemäß einem der Ansprüche 2 bis 14, **gekennzeichnet durch** eine Vorrichtung zur Staubabreinigung für die Abgasbehandlungsvorrichtung.

16. Anlage gemäß einem der Ansprüche 2 bis 15, **gekennzeichnet durch** einen Staubfilter für das Abgas, der in Strömungsrichtung des Abgases vor oder nach der Abgasbehandlungsvorrichtung (8) angeordnet ist.

17. Anlage gemäß einem der Ansprüche 2 bis 16, **dadurch gekennzeichnet, dass** die Abgasbehandlungsvorrichtung (8) eine Vorrichtung zur thermischen Oxidation umfasst.

## Claims

1. Method for treating exhaust gas in an exhaust gas treatment device (8) of a system, wherein the exhaust is withdrawn from a processing device of the system for mechanically and/or thermally processing an inorganic material, and wherein the material to be fed to the processing device is preheated by heat exchange with the exhaust, wherein the temperature of the exhaust gas entering the exhaust gas treatment device (8) is adjusted by adapting the exchange of heat between the exhaust and the material in combination with adapted generation of heat in the processing device, **characterized in that** any influence of variable heat exchange in the preheating of the material on the temperatures in the processing device is compensated for by an adjustment in the generation of heat in the processing device.

2. System having a processing device for mechanically and/or thermally processing an inorganic material which has a heat generating device, an exhaust gas treatment device (8) connected following the processing device relative to the direction of flow of the exhaust gas originating from the processing device, and a material preheater (2) arranged between the processing device and the exhaust gas treatment device (8) in which heat transfer from the exhaust gas to the material takes place, wherein the material preheater (2) comprises one or a plurality of heat exchanger stages (6), wherein a first inlet (4) for the material is arranged upstream, relative to the direction of flow of the material through the material preheater (2), of a heat exchanger stage (6), and a second inlet (5) for the material is arranged downstream, relative to the direction of flow of the material through the material preheater (2), of this heat exchanger stage (6), **characterized by** a control device (7) by means of which the material is distributed as needed to the first inlet (4) and the second inlet (5) in order to influence the temperature of the exhaust gas entering the exhaust gas treatment device (8), and a control device by means of which introduction of heat by the heat generating device into the processing device is adjustable, where the control device(s) (7) is/are designed such that any influence of variable heat exchange in the preheating of the material on the temperatures in the processing device is compensated for by an adjustment in the generation of heat in the processing device.

3. System according to Claim 2, **characterized in that** the material preheater (2) is configured as a cyclone preheater.

4. System according to either of Claims 2 and 3, **characterized in that** the exhaust gas treatment device (8) comprises a catalytic device.

5. System according to Claim 4, **characterized in that** the catalytic device comprises an oxidation catalytic converter (9) and/or a reduction catalytic converter (10).

6. System according to Claim 5, **characterized in that** the oxidation catalytic converter (9) is arranged upstream, in the direction of flow of the exhaust, of the reduction catalytic converter (10).

7. System according to Claim 5 or 6, **characterized in that** the control device(s) (7) is/are designed such that a target temperature range of the exhaust on entry into the oxidation catalytic converter (9) is adjusted between 150°C and 650°C, preferably between 180°C and 550°C, and particularly preferably between 220°C and 450°C.

8. System according to one of Claims 5 to 7, **characterized in that** the control device(s) (7) is/are designed such that a target temperature range of the exhaust on entry into the reduction catalytic converter (10) is adjusted between 150°C and 420°C, preferably between 180°C and 400°C, and particularly preferably between 220°C and 380°C.

9. System according to one of Claims 2 to 8, **characterized in that** the control device (7) is configured as a regulating device that regulates the distribution of the material and/or the heat supply to the exhaust from the heat generating device depending on a target temperature range for the exhaust on entering the exhaust gas treatment device (8).

10. System according to Claim 6 or one of the claims dependent on Claim 6, **characterized in that** said system has a dosing device (13) for a reducing agent arranged between the oxidation catalytic converter (9) and the reduction catalytic converter (10) .

11. System according to Claim 6 or one of the claims dependent on Claim 6, **characterized in that** said system has a cooling device for the exhaust arranged between the oxidation catalytic converter (9) and the reduction catalytic converter (10).

12. System according to Claim 11, **characterized in that** the cooling device comprises a dosing device (12) for water or an aqueous solution arranged between the oxidation catalytic converter (9) and the reduction catalytic converter (10).

13. System according to Claim 10 and Claim 12, **characterized in that** the dosing device (13) for reducing agents and the dosing device (12) for water or an aqueous solution are configured integrally.

14. System according to Claim 13, **characterized in that** the integral dosing device (12, 13) has no return line for a mixture comprising water and reducing agents from an injection device (14) to a reservoir of the dosing device.

15. System according to one of Claims 2 to 14, **characterized in that** said system has a dust removal device for the exhaust gas treatment deice.

16. System according to one of Claims 2 to 15, **characterized in that** said system has a dust filter for the exhaust that is arranged upstream or downstream of the exhaust gas treatment device (8) in the direction of flow of the exhaust.

17. System according to one of Claims 2 to 16, **characterized in that** the exhaust gas treatment device (8) comprises a device for thermal oxidation.

## Revendications

1. Procédé de traitement de gaz d'échappement dans un dispositif de traitement de gaz d'échappement (8) d'une installation, dans lequel on prélève de l'installation le gaz d'échappement provenant d'un dispositif de préparation destiné à la préparation mécanique et/ou thermique d'un matériau inorganique et dans lequel on préchauffe le matériau à envoyer au dispositif de préparation au moyen du gaz d'échappement par échange de chaleur, dans lequel on règle la température du gaz d'échappement entrant dans le dispositif de traitement de gaz d'échappement (8) par un échange de chaleur adapté du gaz d'échappement avec le matériau en combinaison avec une production de chaleur adaptée dans le dispositif de préparation, **caractérisé en ce que** l'on compense l'influence d'un échange de chaleur variable lors du préchauffage du matériau aux températures dans le dispositif de préparation par une adaptation de la production de chaleur dans le dispositif de préparation.

2. Installation avec un dispositif de préparation destiné à la préparation mécanique et/ou thermique d'un matériau inorganique, qui présente un dispositif de production de chaleur, avec un dispositif de traitement de gaz d'échappement (8) se raccordant, par rapport à la direction d'écoulement du gaz d'échappement provenant du dispositif de préparation, au dispositif de préparation, avec un préchauffeur de matériau (2) disposé entre le dispositif de préparation et le dispositif de traitement de gaz d'échappement (8), dans lequel il se produit un transfert de chaleur du gaz d'échappement au matériau, dans laquelle le préchauffeur de matériau (2) comprend un ou plusieurs étage(s) d'échangeur de chaleur (6), dans laquelle une première arrivée (4) pour le matériau est disposée, par rapport à la direction de circulation du matériau à travers le préchauffeur de matériau (2), avant un étage d'échangeur de chaleur (6) et une deuxième arrivée (5) pour le matériau est disposée, par rapport à la direction de circulation du matériau à travers le préchauffeur de matériau (2), après cet étage d'échangeur de chaleur (6), **caractérisée par** un dispositif de commande (7), au moyen duquel le matériau peut être réparti selon les besoins sur la première arrivée (4) et la deuxième arrivée (5) afin d'influencer la température du gaz d'échappement entrant dans le dispositif de traitement de gaz d'échappement (8), et un dispositif de commande au moyen duquel un apport de chaleur par le dispositif de production de chaleur dans le dispositif de préparation est réglable, dans laquelle le/les dispositif(s) de commande (7) est/sont conçues de telle manière qu'une influence d'un échange de chaleur variable lors du préchauffage du matériau aux températures dans le dispositif de préparation est compensé par une adaptation de la production de chaleur dans le dispositif de préparation.

3. Installation selon la revendication 2, **caractérisée en ce que** le préchauffeur de matériau (2) est formé par un préchauffeur à cyclone.

4. Installation selon une des revendications 2 ou 3, **caractérisée en ce que** le dispositif de traitement de gaz d'échappement (8) est un dispositif de catalyseur.

5. Installation selon la revendication 4, **caractérisé en ce que** le dispositif de catalyseur comprend un catalyseur d'oxydation (9) et/ou un catalyseur de réduction (10).

6. Installation selon la revendication 5, **caractérisée en ce que** le catalyseur d'oxydation (9) est disposé, dans la direction d'écoulement du gaz d'échappement, avant le catalyseur de réduction (10).

7. Installation selon la revendication 5 ou 6, **caractérisée en ce que** le/les dispositif(s) de commande (7) est/sont conçu(s) de telle manière qu'une plage de température de consigne du gaz d'échappement lors de l'entrée dans le catalyseur d'oxydation (9) soit réglée entre 150°C et 650°C, de préférence entre 180°C et 550°C, et de préférence encore entre 220°C et 450°C.

8. Installation selon l'une quelconque des revendications 5 à 7, **caractérisée en ce que** le/les dispositif(s) de commande (7) est/sont conçu(s) de telle manière qu'une plage de température de consigne du gaz d'échappement lors de l'entrée dans le catalyseur de réduction (10) soit réglée entre 150°C et 420°C, de préférence entre 180°C et 400°C, et de préférence encore entre 220°C et 380°C.

9. Installation selon l'une quelconque des revendications 2 à 8, **caractérisée en ce que** le dispositif de commande (7) est formé par un dispositif de régulation, qui régule la répartition du matériau et/ou l'apport de chaleur dans le gaz d'échappement par le dispositif de production de chaleur en fonction d'une plage de température de consigne pour le gaz d'échappement lors de l'entrée dans le dispositif de traitement de gaz d'échappement (8).

10. Installation selon la revendication 6 ou une des revendications dépendant de la revendication 6, **caractérisée par** un dispositif de dosage (13) pour un agent réducteur, disposé entre le catalyseur d'oxydation (9) et le catalyseur de réduction (10).

11. Installation selon la revendication 6 ou une des revendications dépendant de la revendication 6, **caractérisée par** un dispositif de refroidissement pour le gaz d'échappement, disposé entre le catalyseur d'oxydation (9) et le catalyseur de réduction (10).

12. Installation selon la revendication 11, **caractérisée en ce que** le dispositif de refroidissement comprend un dispositif de dosage (12) pour de l'eau ou une solution aqueuse, disposé entre le catalyseur d'oxydation (9) et le catalyseur de réduction (10).

13. Installation selon la revendication 10 et la revendication 12, **caractérisée en ce que** le dispositif de dosage (13) pour l'agent réducteur et le dispositif de dosage (12) pour l'eau ou une solution aqueuse sont réalisés intégralement.

14. Installation selon la revendication 13, **caractérisée en ce que** le dispositif de dosage intégral (12, 13) ne présente aucun retour pour un mélange comprenant de l'eau et un agent réducteur d'un dispositif de buse (14) à un réservoir de stockage du dispositif de dosage.

15. Installation selon l'une quelconque des revendications 2 à 14, **caractérisée par** un dispositif pour le dépoussiérage destiné au dispositif de traitement de gaz d'échappement.

16. Installation selon l'une quelconque des revendications 2 à 15, **caractérisée par** un filtre à poussières pour le gaz d'échappement, qui est disposé dans la direction d'écoulement du gaz d'échappement avant ou après le dispositif de traitement de gaz d'échappement (8).

17. Installation selon l'une quelconque des revendications 2 à 16, **caractérisée en ce que** le dispositif de traitement de gaz d'échappement (8) comprend un dispositif d'oxydation thermique.
